(19) **Europäisches Patentamt European Patent Office Office européen des brevets**

(11) **EP 1 868 161 B1**

(12) **FASCICULE DE BREVET EUROPEEN**

(45) Date de publication et mention
de la délivrance du brevet:
**11.01.2012 Bulletin 2012/02**

(51) Int Cl.:
*G06T 7/00* (2006.01)     *G06T 7/60* (2006.01)
*G01N 21/53* (2006.01)     *G01S 11/12* (2006.01)
*B60R 16/023* (2006.01)

(21) Numéro de dépôt: **07290693.6**

(22) Date de dépôt: **04.06.2007**

(54) **Procédé de détermination d'une distance de visibilité pour un conducteur de véhicule**

Verfahren zur Bestimmung der Sichtweite für einen Fahrzeugfahrer

Method of determining the range of visibility for a driver of a vehicle

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.06.2006 FR 0605362**

(43) Date de publication de la demande:
**19.12.2007 Bulletin 2007/51**

(73) Titulaire: **VALEO VISION**
**93012 Bobigny Cedex (FR)**

(72) Inventeurs:
• **Rebut, Julien**
**75010 Paris (FR)**
• **Leleve, Joel**
**93800 Epinay sur Seine (FR)**

(56) Documents cités:
**EP-A- 1 422 663     EP-A2- 1 067 399**
**WO-A-03/069275     WO-A-03/093864**
**DE-A1- 10 034 461     FR-A- 2 876 826**
**US-A- 5 987 152     US-A1- 2003 197 867**

• **BARUN V V ET AL: "NONTRADITIONAL FEATURES IN ACTIVE VISION THROUGH A TURBID MEDIUM: EVALUATION AND OPTIMIZATION ON THE BASE OF MODERN RADIATIVE TRANSFER APPROACHES" PROCEEDINGS OF THE SPIE, SPIE, BELLINGHAM, VA, US, vol. 3837, 20 septembre 1999 (1999-09-20), pages 414-425, XP008019411 ISSN: 0277-786X**
• **BUSCH C ET AL: "Wavelet transform for analyzing fog visibility" IEEE INTELLIGENT SYSTEMS, IEEE SERVICE CENTER, NEW YORK, NY, US, vol. 13, no. 6, novembre 1998 (1998-11), pages 66-71, XP002247567 ISSN: 1094-7167**

## Description

### Domaine de l'invention

La présente invention concerne un procédé de détermination d'une distance de visibilité pour un conducteur d'un véhicule en présence d'un élément perturbant la visibilité du conducteur. L'élément perturbateur est par exemple le brouillard et le véhicule, un véhicule automobile par exemple.

### Etat de la technique

Selon un état de la technique connu EP1, 422, 663A1, un tel procédé de détermination comporte les étapes suivantes :

- relevé d'au moins une image d'un champ de l'espace situé devant le véhicule, ladite image étant définie par un ensemble de pixels,

- séparation de ladite image en deux parties par une ligne passant par un point prédéterminé,

- détermination de la luminosité des pixels de ladite ligne, résultant en une courbe de luminosité,

- détermination d'un point d'inflexion de la courbe de luminosité par calcul de la dérivée de ladite courbe,

- détermination de la distance de visibilité du conducteur dudit véhicule en fonction de la position du point d'inflexion sur ladite image.

Une telle solution présente les inconvénients suivants.
Premièrement, le calcul de la dérivée conduit à des difficultés d'interprétation, des imprécisions et des erreurs importantes, notamment s'il existe un obstacle sur la route sur laquelle se déplace un véhicule, par exemple un autre véhicule, un pont.... En effet, un tel obstacle engendrera dès le calcul de la dérivée une pluralité de points d'inflexion, d'où la difficulté de discriminer les différents points d'inflexion s'ils sont proches l'un de l'autre et de choisir le bon point d'inflexion correspondant à la distance de visibilité recherchée.
Deuxièmement, le calcul de la dérivée amplifie le bruit généré sur la courbe de luminosité engendrant des incertitudes sur la courbe elle-même.
Enfin, le calcul de la dérivée représente une charge de calcul élevée.

### Objet de l'invention

La présente invention apporte remède à ces inconvénients de l'état de la technique.
En effet, elle concerne selon un premier objet, un procédé de détermination d'une distance de visibilité pour un conducteur d'un véhicule en présence d'un élément perturbant la visibilité du conducteur, comportant les étapes suivantes :

- relevé d'au moins une image d'un champ de l'espace situé devant le véhicule, ladite image étant définie par un ensemble de pixels et de lignes de balayage,

- séparation de ladite image en deux parties par une première ligne passant par un point prédéterminé,

- détermination de la luminosité des pixels de ladite première verticale, résultant en une courbe de luminosité,

caractérisé en ce qu'il comporte en outre les étapes suivantes :

- détermination d'une première tangente à la courbe de luminosité tangente à un endroit de ladite courbe représentatif d'une région de luminosité sensiblement indépendante de l'élément perturbateur,

- détermination d'une deuxième tangente à la courbe de luminosité tangente à un endroit de ladite courbe représentatif d'une stabilisation de la luminosité,

- détermination d'une ligne de balayage en fonction de la première tangente et de la deuxième tangente, ladite ligne de balayage étant représentative de la distance de visibilité.

Comme on le verra en détail plus loin, la détermination de la distance de visibilité ne fait intervenir que des combinaisons linéaires simples, cette détermination est donc plus rapide que celle de l'art antérieur. De plus, il élimine les incertitudes liées au bruit généré par le calcul de la dérivée de l'état de la technique, puisqu'il n'existe plus de calcul de dérivée. Enfin, ce procédé peut être utilisé avec la présence d'obstacles sur la route, sans que la détermination de la distance de visibilité en soit perturbée.
Selon des modes de réalisation non limitatifs, le procédé de détermination de la distance de visibilité présente les caractéristiques supplémentaires suivantes :

- La première ligne est une ligne droite verticale. Ainsi, la détermination d'une telle ligne droite verticale est rapide.

- Ledit élément perturbant est le brouillard. Ainsi le procédé est utile par temps de brouillard.

- Le procédé comporte en outre :

  - une étape de recherche des zones de ladite image répondant chacune à un prédicat d'homogénéité,

- une détermination du centre de gravité de chacune desdites zones,

- une détermination du centre de gravité global de chacun desdits centres de gravité desdites zones, ledit centre de gravité giobai étant ledit point prédéterminé.

Ainsi, le centre de gravité global G est la résultante de centres de gravité de deux zones homogènes sur la route et dans le ciel. En recherchant ces zones, on limite le risque de mesures perturbées par des obstacles (bords de route, terre plein central, arbres...etc.). Ceci est utile dans les virages.

- La deuxième tangente est parallèle à la première tangente. Ceci permet d'avoir un calcul simple et rapide.

- La ligne de balayage est calculée en fonction d'un point d'intersection entre la courbe de luminosité et une parallèle à la première tangente à une distance déterminée de la première tangente et de la deuxième tangente.

- La distance déterminée est la distance entre la première tangente et la deuxième tangente divisée par deux.

- La distance de visibilité est déterminée à partir de la ligne de balayage trouvée et au moyen d'une table de correspondance ou au moyen d'un calcul trigonométrique. La détermination de la distance de visibilité par lecture d'une table de correspondance est très rapide.

- le calcul trigonométrique est le suivant : la distance de visibilité est égale à une hauteur par rapport au sol d'un élément effectuant le relevé de l'image, divisée par la tangente de :

  - la valeur d'un angle de visée de la ligne de balayée la plus élevée, plus
  - un champ angulaire total divisé par le numéro de ligne de balayage la plus élevée, le tout multiplié par :

    - ce numéro de ligne la plus élevée moins la ligne de balayage correspondant au point d'intersection calculé.

L'invention concerne selon un deuxième objet, un dispositif de détermination d'une distance de visibilité pour un conducteur d'un véhicule en présence d'un élément perturbant la visibilité du conducteur, comportant :

- des moyens pour recevoir au moins une image relevée à partir d'un champ de l'espace situé devant le véhicule, ladite image étant définie par un ensemble de pixels et de lignes de balayage,

- des moyens pour séparer ladite image en deux parties par une première ligne passant par un point prédéterminé,

- des moyens pour déterminer la luminosité des pixels de ladite première ligne, résultant en une courbe de luminosité,

caractérisé en ce qu'il comporte en outre :

- des moyens pour déterminer une première tangente à la courbe de luminosité tangente à un endroit de ladite courbe représentatif d'une région de luminosité sensiblement indépendante de l'élément perturbateur,

- des moyens pour déterminer une deuxième tangente à la courbe de luminosité tangente à un endroit de ladite courbe représentatif d'une stabilisation de la luminosité, et

- des moyens pour déterminer une ligne de balayage fonction de la première tangente et de la deuxième tangente, ladite ligne de balayage étant représentative de la distance de visibilité.

Selon des modes de réalisation non limitatifs, le dispositif comporte les caractéristiques supplémentaires suivantes :

- Le dispositif est intégré dans une caméra à bord du véhicule.

- La ligne de balayage est calculée en fonction d'un point d'intersection entre la courbe de luminosité et une parallèle à la première tangente et à la deuxième tangente à une distance déterminée de la première tangente et de la deuxième tangente.

- La distance déterminée est la distance entre la première tangente et la deuxième tangente divisée par deux.

- la distance de visibilité est déterminée à partir de la ligne de balayage trouvée et au moyen d'une table de correspondance ou au moyen d'un calcul trigonométrique.

L'invention concerne selon un troisième objet, un produit programme d'ordinateur comprenant une ou plusieurs séquences d'instructions pour mettre en oeuvre, lorsque ledit programme est exécuté par un processeur, le procédé selon l'une quelconque des caractéristiques précédentes.

## Brève description des figures

D'autres caractéristiques et avantages de la présente invention seront mieux compris à l'aide de la description et des dessins parmi lesquels :

- La Fig. 1 est une représentation schématique d'un véhicule muni d'une caméra comportant un dispositif de mise en oeuvre du procédé selon l'invention ;
- La Fig. 2 est un schéma montrant les différentes étapes du procédé selon l'invention ;
- La Fig. 3 illustre une première image telle que relevée dans le procédé selon l'invention ;
- La Fig. 4 représente une courbe de luminosité obtenue à partir de l'image de la Fig. 3 ;
- La Fig. 5 représente la courbe de luminosité de la Fig. 4 après filtrage ;
- La Fig. 6 représente la courbe de luminosité de la Fig. 5 sur laquelle sont tracées des tangentes ;
- La Fig. 7 illustre une deuxième image comportant un obstacle telle que relevée dans le procédé selon l'invention ;
- La Fig. 8 représente une courbe de luminosité obtenue à partir de l'image de la Fig. 7 après filtrage ;
- La Fig. 9 représente la courbe de luminosité de la Fig. 8 sur laquelle sont tracées des tangentes ; et
- La Fig. 10 est un schéma d'un dispositif de détermination permettant de mettre en oeuvre le procédé selon l'invention.

## Description détaillée de modes de réalisation non limitatifs de l'invention

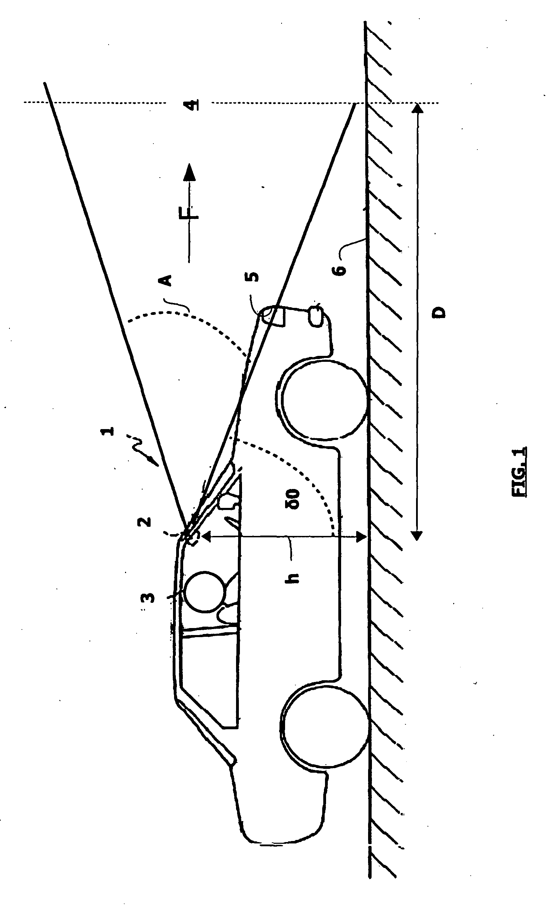

A la Fig. 1, on a représenté de manière schématique un véhicule 1 équipé d'une caméra 2 et conduite par un conducteur 3 qui peut observer une scène dans un champ de l'espace 4 situé devant le véhicule lorsque son véhicule 1 est à l'arrêt ou en mouvement.

La caméra 2 est située à une hauteur h du sol de la route 6 et est par exemple située à l'avant du véhicule ou sur le côté. Elle est par exemple fixée derrière le pare-brise et pointe vers l'avant de la scène dans le sens du déplacement F du véhicule. Ainsi, la caméra 2 comporte un champ angulaire total A qui peut être assimilé au champ de l'espace situé devant le véhicule 1, ce champ angulaire total A étant défini par un angle de visée minimum $\alpha_0$ représenté sur la Fig. 1. Une distance de visibilité D pour un conducteur sera reliée à la position de la caméra 2 sur le véhicule 1.

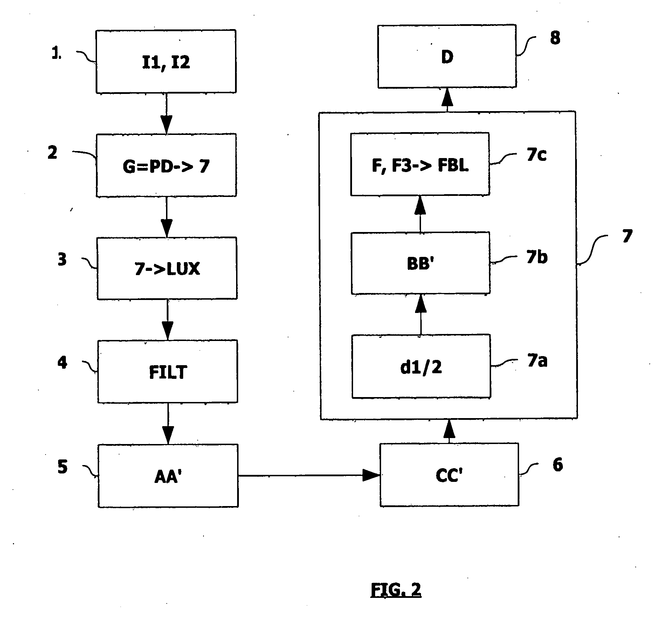

Afin de déterminer la distance de visibilité D pour le conducteur 3 lorsqu'il existe un élément perturbant ou modifiant BR ladite visibilité, notamment lorsque cet élément perturbateur est le brouillard, pour anticiper l'allumage des feux antibrouillards 5 du véhicule 1, les étapes suivantes sont effectuées telles qu'illustrées à la Fig. 2.

**Dans une première étape 1),** la caméra 2 saisit une image I1 dans le champ de l'espace 4 situé devant le véhicule 1. Le champ de l'espace 4, dans l'exemple non limitatif donné, ne comporte aucun obstacle sur la route 6.

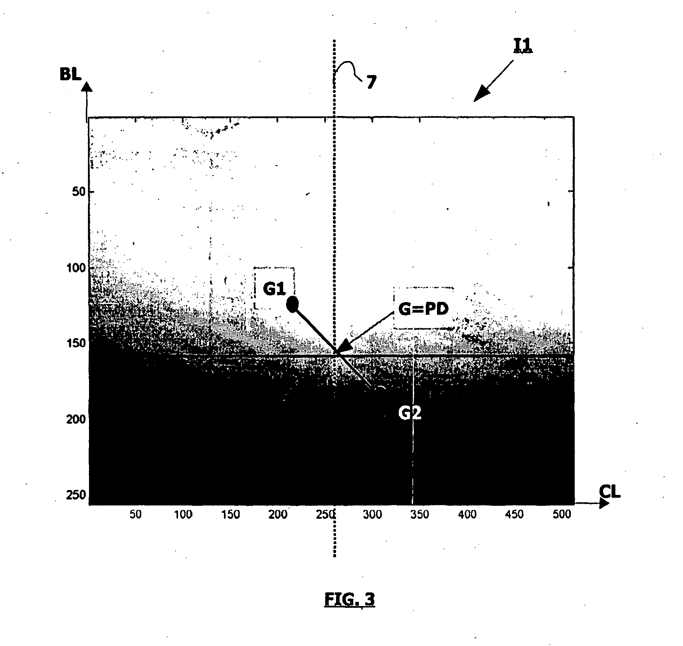

La Fig. 3 représente une image I1 en noir et blanc prise par la caméra 2. Cette image I1 représente une route en présence de brouillard BR. L'image I1 est caractérisée par un ensemble de lignes de balayage BL et par un ensemble de pixels PIX représentant chacun des points de l'image dont la luminosité va du noir au blanc, la luminosité étant une quantité de lumière reçue pour chaque pixel. Chaque pixel est dans un exemple non limitatif codé sur un octet avec 256 niveaux de gris possibles. L'image I1 est caractérisée en abscisse par un numéro de colonne CL variant de 0 à 500 et en ordonnée par des lignes de balayage BL de l'image variant de 0 à 250.

**Dans une deuxième étape 2)**, on effectue une recherche de zones de l'image I1 répondant chacune à un prédicat d'homogénéité. Cette recherche peut par exemple, dans un mode de réalisation non limitatif, être réalisée à l'aide d'une méthode de segmentation par division-fusion telle que la méthode tetra-arbre (« Quadtree » en anglais) bien connue de l'homme du métier. Le tetra-arbre possède une pluralité de noeuds, chaque noeud possédant exactement quatre noeuds fils, excepté les noeuds terminaux. Chaque noeud correspond à un bloc, c'est à dire à une zone de l'image de forme carrée. Chaque bloc associé à un noeud est analysé de façon récursive afin de décider s'il doit être divisé en quatre sous-blocs. L'analyse récursive s'arrête lorsque chacun des sous-blocs respecte un prédicat d'homogénéité photométrique utilisant des matrices de cooccurrence.

D'autres méthodes telles que les algorithmes de k-means peuvent également être utilisées.

L'application de la recherche de zones d'homogénéité permet de définir deux régions sur l'image I1 ayant respectivement pour centres de gravité G1 et G2 tels qu'illustrés sur la Fig. 3.

On calcule ensuite le centre de gravité global G des deux centres de gravité G1 et G2 par lequel on fait passer une première ligne 7. Cette première ligne 7 est représentative de la transparence de l'atmosphère. Le centre de gravité global G représente un point prédéterminé PD par lequel la première ligne 7 passe. Ce point prédéterminé PD peut être dans un autre exemple non limitatif, le centre de l'image I1.

Ainsi, le centre de gravité global G est la résultante de centres de gravité de deux zones homogènes sur la route et dans le ciel. En recherchant ces deux zones homogènes, on limite le risque de mesures perturbées par des obstacles (bords de route, terre plein central, arbres...etc.). Ceci est utile dans les virages où la première ligne 7 centrée en milieu d'image, ne verrait qu'un des deux bords de route par exemple.

Chacun des points de la première ligne 7 peut être caractérisé par une ligne de balayage BL et une luminosité correspondant à un certain niveau de gris GL.

Dans un mode de réalisation non limitatif, cette première ligne 7 est une ligne droite verticale. Le fait de prendre une ligne droite verticale 7 plutôt qu'une autre ligne (courbe et en diagonale par exemple) permet d'éviter des temps de calculs fastidieux. Cette ligne droite verticale 7 est révélatrice de la transparence de l'atmosphère; on va relever ainsi la luminosité de chaque point de l'environnement situé sur ladite ligne verticale 7.

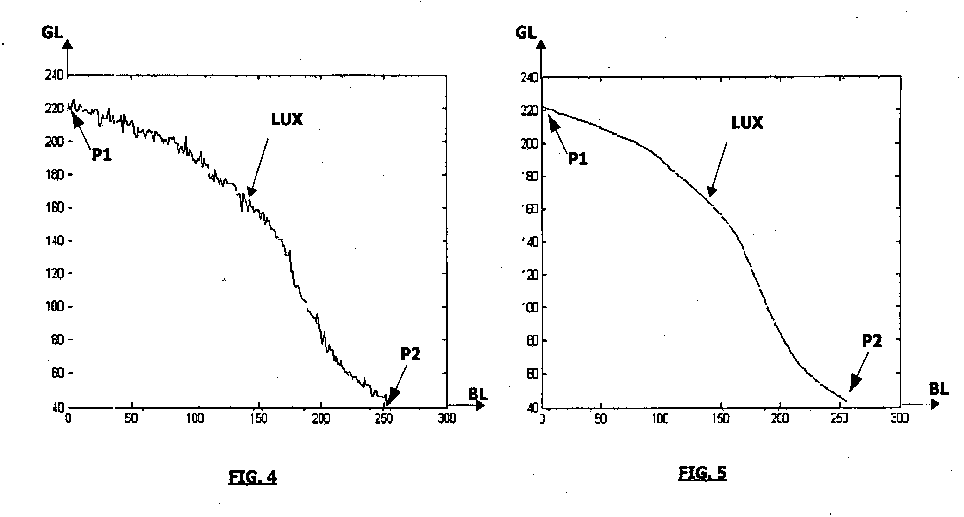

**Ainsi, dans une troisième étape 3)**, on détermine une courbe de luminosité LUX (également appelée courbe densitométrique du brouillard) à partir de la ligne verticale 7 obtenue. On détermine la luminosité des pixels PIX de la ligne verticale 7 en fonction de la position du pixel en hauteur sur ladite ligne verticale 7. Une telle courbe de luminosité LUX est représentée à la Fig. 4. Elle présente une forme en S inversée dans cet exemple non limitatif. Elle est ainsi assimilable à une courbe en S. La courbe LUX représente en ordonnée, la valeur du niveau de gris GL des points PIX de la ligne verticale 7 et en abscisse, le numéro de la ligne de balayage BL de ces mêmes points. Ainsi, le point P1 correspond à la ligne de balayage 0 et a un niveau de gris GL égal à environ 220. De même, le point P2 correspond à la ligne de balayage 250 et a un niveau de gris GL égal à environ 40. On notera que la pente de cette courbe LUX varie en fonction de la caractéristique (par exemple béton, goudron, terre, ...etc.) de la route 6. Plus la route est claire (exemple route en béton), plus la pente sera grande. Au contraire, lorsqu'elle est sombre (exemple route en goudron), la pente sera moins grande. On notera que cette courbe de luminosité LUX comporte du bruit dont l'amplitude est liée, en particulier, aux hétérogénéités de la route (gravillons, pavés, goudrons, marquages au sol, traces de freinage...etc.), aux écarts de sensibilité (différences de niveau de gris) des pixels successifs entre eux, aux parasites électromagnétiques (bruit électrique) et à des problèmes thermiques. Ces bruits sont des bruits haute fréquence.

**Ainsi, dans une quatrième étape 4)**, on filtre le bruit sur la courbe de luminosité LUX par des moyens de filtrage FILT, dans un exemple non limitatif, ces moyens de filtrage FILT effectuent une moyenne glissante sur une fenêtre optique de quelques pixels. La courbe de luminosité ainsi filtrée est représentée à la Fig. 5.

Dans les étapes suivantes, on utilise une méthode de tangentes appliquée à la courbe de luminosité en forme de S pour rechercher une ligne de balayage FBL représentative de la distance de visibilité D.

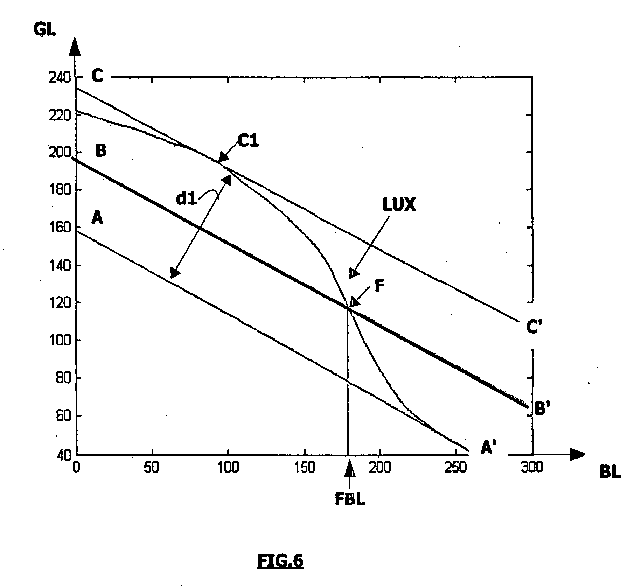

**Ainsi, dans une cinquième étape 5)**, on détermine une première tangente AA' à la courbe de luminosité LUX. Cette tangente AA' est tangente à un endroit de ladite courbe représentatif d'une région de luminosité sensiblement indépendante du brouillard BR. Une telle tangente est illustrée à la Fig. 6.

Comme on peut le voir, la tangente AA' est tangente à la partie basse de la courbe. Cette partie de la courbe est représentative de l'évolution de la luminosité du sol dans une région proche du véhicule et donc sensiblement indépendante de la densité du brouillard (cette région correspond à environ une dizaine de mètres devant le véhicule). La droite AA' correspondrait ainsi à la courbe de luminosité de la partie visible de la route en l'absence de brouillard.

**Dans une sixième étape 6)**, on détermine une deuxième tangente CC' à la courbe de luminosité LUX. Cette tangente CC' est tangente à un endroit de ladite courbe représentatif d'une stabilisation de la luminosité. Elle est également illustrée à la Fig. 6.

Dans un mode de réalisation non limitatif, cette deuxième tangente CC' est parallèle à la première tangente AA'. Cela permet de déterminer rapidement cette deuxième tangente. La deuxième tangente CC' tangente la courbe LUX en un point C1 qui correspond au début de la stabilisation de la luminosité dans la partie haute de l'image, liée à l'apparente l'homogénéité du ciel vue depuis la camera 2.

**Dans une septième étape 7)**, on détermine une ligne de balayage FBL en fonction de la première tangente AA' et de la deuxième tangente CC', ladite ligne de balayage FBL étant représentative de la distance de visibilité D. Cette ligne de balayage FBL est déterminée de la manière suivante.

**Dans une première sous étape 7a)**, on définit une distance d1 égale à la distance entre la première tangente AA' et la deuxième tangente CC' et on divise cette distance d1 par deux. La distance d1 est représentative de la dynamique de la scène entre la zone la plus sombre et la zone de luminosité maximale exploitable, la dynamique correspondant ainsi à l'écart entre la luminosité la plus faible et la plus forte.

**Dans une deuxième sous étape 7b)**, on définit une droite BB' parallèle à la première tangente AA' et située à la distance d1 divisée par deux, dans un mode non limitatif, de cette première tangente AA'. Cette tangente médiane est illustrée à la Fig. 6 également.

**Dans une troisième sous étape 7c)**, on détermine un point d'intersection F, appelé également point d'inflexion, entre cette droite parallèle BB' et la courbe de luminosité LUX. La ligne de balayage FBL est calculée en fonction de ce point d'intersection F puisque qu'elle correspond à l'ordonnée de ce point d'intersection F.

**Dans une huitième étape 8)**, on détermine la distance de visibilité D en fonction de la ligne de balayage ainsi obtenue FBL.

Ainsi, dans un premier mode de réalisation non limitatif, on effectue un calcul trigonométrique suivant :

$$D = \frac{h}{tg\left(\alpha 0 + \dfrac{A}{256}\right)(256 - FBL)}$$

avec :

- h : hauteur de la caméra 2 par rapport au sol 6,

- A : champ angulaire total,

- α0 : valeur de l'angle de visée minimum correspondant à la ligne de balayage 256.

On notera qu'on a pris comme hypothèse que la ligne de balayage n°128 correspondait à l'horizon. Dans un exemple non limitatif, le champ angulaire total A (également appelé champ de l'objectif de la caméra 2) est compris entre 15 et 30°.

On notera que, pour ce premier mode de réalisation, la mesure sur toute une chaîne de montage de véhicules 1 des angles de positionnement de la caméra 2 (dont l'angle de visée minimum α0) peut être un peu lourde à mettre en oeuvre et pas très précise.

Aussi, dans un deuxième mode de réalisation non limitatif, on n'effectue pas de calcul trigonométrique de la distance de visibilité D telle qu'indiqué ci-dessus, mais on détermine la distance de visibilité D au moyen d'une table de correspondance TAB qui lie le numéro de ligne à balayage FBL trouvée et la distance de visibilité D. Cette table TAB peut être téléchargée dans une mémoire d'un dispositif de détermination PRO, à savoir un calculateur se trouvant dans la caméra 2 par exemple. Ainsi, une lecture dans une table de correspondance est plus intéressante qu'un calcul trigonométrique car moins gourmande en temps processeur.

La table de correspondance TAB est paramétrée de manière à prendre en considération en particulier et de manière non limitative les dispersions de l'optique et le capteur optique de la caméra qui transforme les photons en électrons et ensuite en image vidéo.

On pourra également prendre en compte pour le paramétrage, si besoin est, les supports de la caméra 2 de manière à prendre en compte l'éventuel basculement de la caméra, les degrés de liberté de réglage de la caméra 2, ou encore la carrosseries du véhicule 1 (compte tenu des tolérances d'emboutissage, d'assemblage, de fabrication de nature des matériaux...).

Ainsi, selon la valeur distance de visibilité D ainsi obtenue, on décide d'allumer les feux antibrouillard ou non. Dans un exemple non limitatif, si la valeur de cette distance D est inférieure à un seuil égal à 100m, on décide qu'il existe du brouillard. On opte pour l'allumage des feux antibrouillard, soit en prévenant le conducteur afin qu'il le fasse manuellement, soit en le faisant automatiquement. Ainsi, dans un mode de réalisation non limitatif, il y aura émission d'un signal de détection SIG lorsque ladite distance de visibilité D passe au-dessous d'un certain seuil, ici 100m, pour prévenir le conducteur 3 du véhicule 1 d'allumer ses feux antibrouillard.

Et si la valeur est comprise entre 25 et 50m, le brouillard est très dense et on optera par exemple pour l'allumage automatique des feux antibrouillard.

De même, lorsque la distance de visibilité redevient normale, les feux antibrouillard peuvent être éteints.

L'accès à la distance de visibilité D peut permettre également d'agir sur l'intensité des feux antibrouillard en fonction de l'impact du brouillard BR (plus ou moins dense) sur cette distance de visibilité. Ainsi, on modulera/ajustera la photométrie du faisceau lumineux émis par le feu de signalisation ou par le projecteur, notamment son intensité lumineuse en modulant l'alimentation électrique de la ou des sources lumineuses. Cette modulation sera par exemple commandée à l'aide d'un système de régulation automatisé, prenant en compte la distance de visibilité D.

On notera par ailleurs que le signal de détection SIG peut également servir de signal de commande envoyé par exemple sur un bus CAN (Controller Area Network) relié à une carte du type LCS (Light Control System) pour agir directement sur la vitesse du véhicule qui peut être ainsi régulée en fonction du brouillard BR.

L'exemple non limitatif qui a été donné précédemment à la Fig. 3 est un exemple dans lequel il n'y a aucun obstacle dans le champ de l'espace 4.

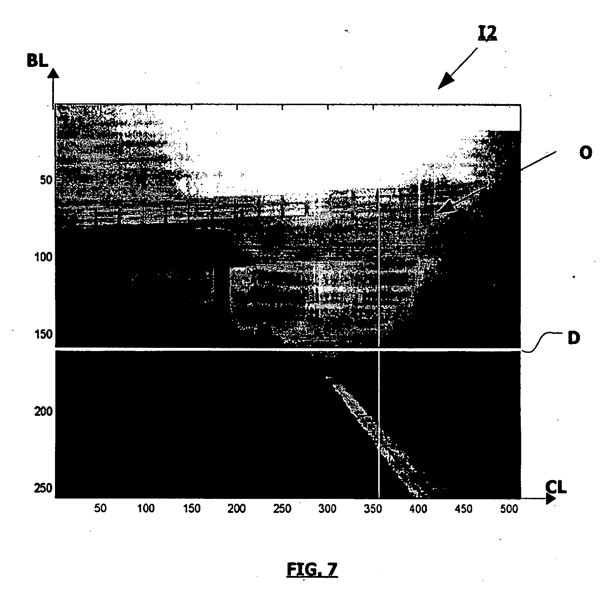

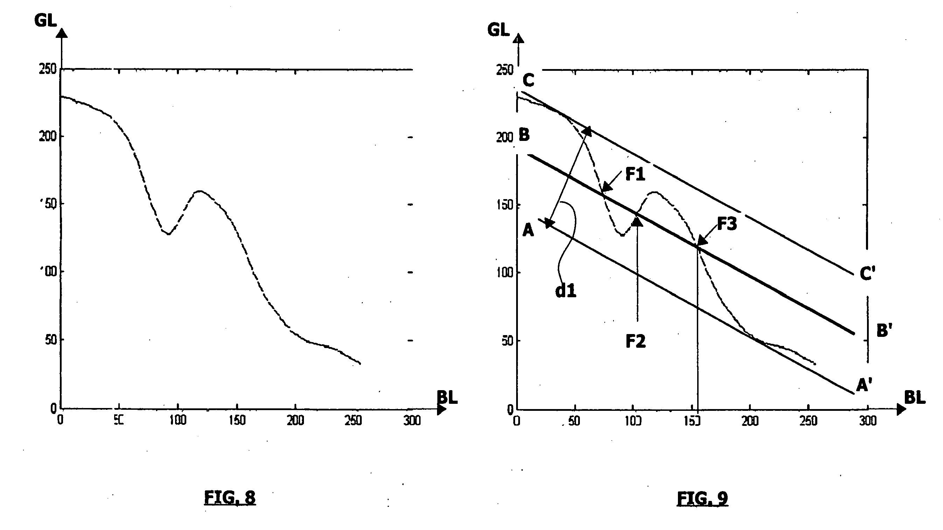

Le procédé de détermination de la visibilité D présenté est robuste car il fonctionne également avec un champ de l'espace 4 qui présente un ou plusieurs obstacles sur la route, comme illustré aux Fig. 7 à 9. Comme on peut le voir à la Fig. 7, la caméra 2 a relevé une image 12 dans laquelle, la route 6 comporte un obstacle, ici un pont O. La distance de visibilité D a été matérialisée par un trait horizontal sur cette Figure. La courbe de luminosité LUX qui est déduite de cette image 12 est représentée à la Fig. 8. Elle présente une forme ondulée. On effectue comme décrit précédemment, le tracé de la première tangente AA', de la deuxième tangente CC' et de la droite parallèle BB' et on obtient dans ce cas trois points d'intersection F1, F2, F3 avec la courbe de luminosité LUX comme indiqué sur la Fig. 9. Pour déterminer le point d'intersection correspondant à la distance de visibilité D, on prend le premier point d'intersection depuis le bas de la courbe de luminosité LUX. S'il est dû à un obstacle au lieu du brouillard, le principe de la détection reste inchangé, l'obstacle donne la distance de visibilité D. Le point d'intersection recherché est ici le point F3.

Ainsi, même en présence d'obstacle, il est aisé de trouver le point d'intersection correspondant à la distance de visibilité D.

On notera que dans le cas où il y aurait une ambiguïté entre le point d'intersection recherché F3 et un autre point d'intersection, par exemple F2, correspondant en fait à un obstacle O (lorsque ces deux points sont très rapprochés l'un de l'autre), il est possible de dépister le point d'intersection correspondant à l'obstacle O pour qu'on ne le confonde pas avec le point recherché.

Ainsi, dans un mode de réalisation non limitatif, on suit la distorsion correspondant à F2 sur la courbe de luminosité LUX pendant une petite période de temps déterminée, entre un temps t1 et un temps t2. La distorsion évoluera en fonction de l'obstacle O, par exemple le pont, du milieu de la courbe de luminosité LUX (pont se trouvant à l'infini sur l'image I2 à l'instant t1), vers le haut de la courbe (pont se trouvant à proximité de la verticale du véhicule à l'instant t2). S'il s'agit d'un obstacle au sol ou d'une forte variation de diffusion du sol (passage du bitume au béton par exemple), la distorsion évoluera du milieu de l'image vers le bas. L'évolution rapide de la distorsion liée à l'obstacle O, par rapport au point d'intersection recherché F3 qui lui est relativement stable, voire complètement stable, sur l'intervalle de temps t1-t2 étudié, permet ainsi de différencier les deux points et de trouver le point d'inflexion correct F3.

On notera qu'il est possible, dans un mode de réalisation non limitatif, de prendre en considération l'assiette du véhicule lors de la détermination de la distance de visibilité D. L'assiette du véhicule sera calculée au moyen d'un capteur (non représenté) situé sur la suspension du véhicule par exemple.

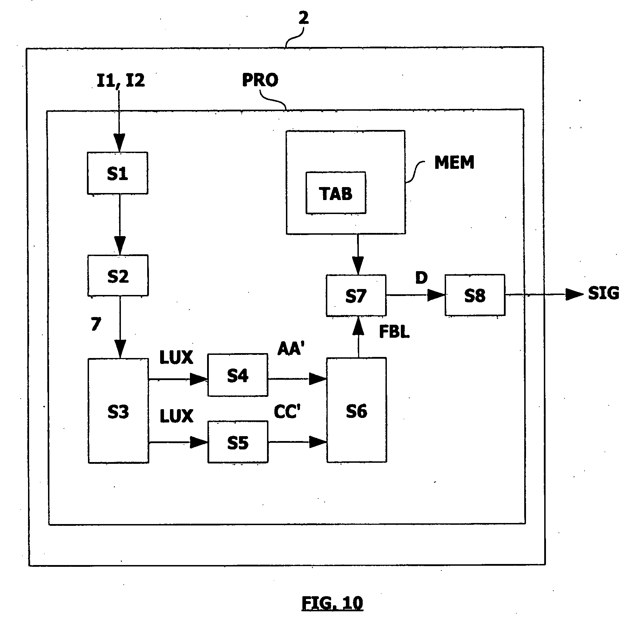

Enfin, on notera que pour déterminer la distance de visibilité D comme décrit précédemment, le véhicule 1 comporte un dispositif de détermination PRO illustré à la Fig. 10 permettant de mettre en oeuvre le procédé décrit, et comprenant :

- des moyens S1 pour recevoir au moins une image I1, I2 relevée à partir d'un champ de l'espace situé devant le véhicule, ladite image étant définie par un ensemble de pixels PIX et de lignes de balayage BL,

- des moyens S2 pour séparer ladite image en deux parties par la ligne droite verticale 7 passant par un point prédéterminé PD,

- des moyens S3 pour déterminer la luminosité des pixels de ladite ligne droite verticale 7, résultant en une courbe de luminosité LUX,

- des moyens S4 pour déterminer une première tangente AA' à la courbe de luminosité LUX tangente à un endroit de ladite courbe représentatif d'une région de luminosité sensiblement indépendante de l'élément perturbateur BR,

- des moyens S5 pour déterminer une deuxième tangente CC' à la courbe de luminosité LUX tangente à un endroit de ladite courbe représentatif d'une stabilisation de la luminosité, et

- des moyens S6 pour déterminer une ligne de balayage FBL en fonction de la première et de la deuxième tangente, ladite ligne de balayage étant représentative de la distance de visibilité D.

Il comporte en outre :

- des moyens S7 pour déterminer la distance de visibilité D à partir de la ligne de balayage trouvée FBL et au moyen de la table de correspondance TAB ou au moyen d'un calcul trigonométrique comme décrit précédemment,

- une mémoire MEM comprenant ladite table de correspondance TAB,

- si nécessaire, des moyens S8 pour envoyer le signal de détection SIG lorsque la distance de visibilité D passe au dessous d'un certain seuil comme décrit précédemment, et

- des moyens de filtrage FILT de la courbe de luminosité LUX

Bien entendu, ces moyens S1 à S8 et FILT peuvent être regroupés en un seul moyen ou en plusieurs ensembles de moyens.

Ce dispositif PRO est dans un mode de réalisation non limitatif intégré dans la caméra 2 comme illustré à la Fig. 10. Ce mode est plus intéressant qu'un mode dans lequel le dispositif de détermination serait intégré dans un endroit loin de la caméra, car à ce moment, il serait nécessaire de véhiculer les images vidéo au moyen de fibres optiques par exemple, d'où un coût supplémentaire et des moyens supplémentaires nécessitant une cadence de distribution rapide des images vidéo de la caméra 2 vers le dispositif de détermination. Les moyens S1 à S8 et FILT du dispositif PRO sont soient hardware, soient logiciels, soient les deux.

Ainsi, le procédé de détermination selon l'invention peut être implémenté par un dispositif détermination composé d'un matériel hardware ou logiciel, ou les deux. De tels matériels hardware ou logiciel peuvent être implémentés de différentes manières tels que, respectivement, au moyen de circuits électroniques câblés ou d'un circuit intégré, par exemple un processeur, qui est programmé de manière appropriée. Le circuit intégré peut être compris dans un appareil portable, tel que la caméra. Le circuit intégré comprend une ou plusieurs séquences d'instructions. Ainsi, une telle séquence d'instructions qui est comprise, par exemple dans une mémoire de l'appareil portable, permet au circuit intégré d'exécuter les différentes étapes du procédé de détermination. La séquence d'instructions peut être chargée dans la mémoire en lisant un support de données, tel que dans un exemple non limitatif un disque dur, un CD, ou un DVD. Un fournisseur de service peut également rendre disponible une telle séquence d'instructions via un réseau de communication, tel que par exemple internet.

Bien entendu, l'invention n'est pas limitée aux modes de réalisation qui viennent d'être décrits. Notamment, la méthode de recherche des zones d'homogénéité a été décrite dans le cas des méthodes de segmentation par division-fusion mais d'autres méthodes de segmentation peuvent être utilisées telles que les méthodes par division de régions ou par croissance de régions connues de l'homme du métier. En outre, la luminosité a été décrite en référence avec le niveau de gris des pixels de l'image mais elle peut également être représentée par une autre grandeur en fonction du codage d'image utilisé.

De même, le procédé selon l'invention a été décrit dans le cas d'une détection de brouillard mais le procédé est également transposable à d'autres éléments perturbant ou modifiant la visibilité du conducteur. Ainsi, le procédé décrit est intéressant lorsqu'il existe du brouillard, mais également pour tout autre élément perturbant ou modifiant la visibilité du conducteur tel que de la poussière ou de la fumée, ou d'autres éléments ayant les mêmes caractéristiques de diffusion de la lumière, comportant donc des particules de l'ordre du micromètre que la route comprenne un obstacle tel qu'un pont ou une voiture se situant devant le véhicule du conducteur ou sur la voie d'en face, ou ne comprenne aucun obstacle.

De plus, le procédé décrit, en n'exploitant que des combinaisons linéaires simples (calcul des tangentes) est particulièrement légère en charge de calcul, et donc rapide. De plus, elle élimine les incertitudes liées au bruit généré par le calcul de dérivée imposé par la recherche du point d'inflexion dans la méthode de l'art antérieur.

Enfin, le procédé décrit est robuste car il permet d'extraire des distances de visibilité même en présence d'obstacles qui étaient trop perturbateurs pour exploiter la méthode utilisée dans l'art antérieur.

Enfin, c'est une solution simple et peu coûteuse à mettre en oeuvre.

## Revendications

1. Procédé de détermination d'une distance de visibilité (D) pour un conducteur d'un véhicule en présence d'un élément (BR) perturbant la visibilité du conducteur, comportant les étapes suivantes :

   - relevé d'au moins une image (I1, 12) d'un champ de l'espace (4) situé devant le véhicule, ladite image étant définie par un ensemble de pixels (PIX) et de lignes de balayage (BL),
   - séparation de ladite image (I1, I2) en deux parties par une première ligne (7) passant par un point prédéterminé (PD),
   - détermination de la luminosité des pixels (PIX) de ladite première ligne (7), résultant en une courbe de luminosité (LUX),

   **caractérisé en ce qu'**il comporte en outre les étapes suivantes :

   - détermination d'une première tangente (AA') à la courbe de luminosité (LUX) tangente à un endroit de ladite courbe représentatif d'une région de luminosité sensiblement indépendante de l'élément perturbateur (BR),
   - détermination d'une deuxième tangente (CC')

   à la courbe de luminosité (LUX) tangente à un endroit de ladite courbe représentatif d'une stabilisation de la luminosité,
   - détermination d'une ligne de balayage (FBL) en fonction de la première (AA') tangente et deuxième tangente (CC'), ladite ligne de balayage (FBL) étant représentative de la distance de visibilité (D).

2. Procédé selon la revendication 1, **caractérisé en ce que** ledit élément perturbant est le brouillard.

3. Procédé selon l'une des revendications 1 ou 2, **caractérisé en ce que** la première ligne (7) est une ligne droite verticale.

4. Procédé selon l'une des revendications précédentes, **caractérisé en ce qu'**il comporte en outre :

   - une étape de recherche des zones de ladite image répondant chacune à un prédicat d'homogénéité,
   - une détermination du centre de gravité (G1, G2) de chacune desdites zones,
   - une détermination du centre de gravité global (G) de chacun desdits centres de gravité (G1, G2) desdites zones, ledit centre de gravité global (G) étant ledit point prédéterminé (PD).

5. Procédé selon l'une des revendications précédentes, **caractérisé en ce que** la deuxième tangente (CC') est parallèle à la première tangente (AA').

6. Procédé selon l'une des revendications précédentes, **caractérisé en ce que** la ligne de balayage (FBL) est calculée en fonction d'un point d'intersection (F) entre la courbe de luminosité (LUX) et une parallèle (BB') à la première tangente (AA') à une distance (d1/2) déterminée de la première tangente (AA') et de la deuxième tangente (CC').

7. Procédé selon la revendication précédente, **caractérisé en ce que** la distance déterminée (d1/2) est la distance entre la première tangente (AA') et la deuxième tangente (CC') divisée par deux.

8. Procédé selon l'une des revendications précédentes, **caractérisé en ce que** la distance de visibilité (D) est déterminée à partir de la ligne de balayage (FBL) trouvée et au moyen d'une table de correspondance (TAB) ou au moyen d'un calcul trigonométrique.

9. Procédé selon la revendications précédente, **caractérisé en ce que** le calcul trigonométrique est le suivant : la distance de visibilité est égale à une hauteur (h) par rapport au sol (6) d'un élément (2) effectuant le relevé de l'image, divisée par la tangente de

- la valeur d'un angle (α0) de visée de la ligne de balayage la plus élevée (BL256), plus

- un champ angulaire total (A) divisé par le numéro (256) de ligne de balayage la plus élevée (BL256), le tout multiplié par :

- ce numéro de ligne la plus élevée (256) moins la ligne de balayage (FBL) correspondant au point d'intersection (F) calculé.

10. Dispositif de détermination (PRO) d'une distance de visibilité (D) pour un conducteur d'un véhicule en présence d'un élément (BR) perturbant la visibilité du conducteur, comportant :

- des moyens (S1) pour recevoir au moins une image (I1, I2) relevée à partir d'un champ de l'espace (4) situé devant le véhicule, ladite image étant définie par un ensemble de pixels (PIX) et de lignes de balayage (BL),

- des moyens (S2) pour séparer ladite image (I1, I2) en deux parties par une première ligne (7) passant par un point prédéterminé (PD),

- des moyens (S3) pour déterminer la luminosité des pixels de ladite première ligne (7), résultant en une courbe de luminosité (LUX), **caractérisé en ce qu'**il comporte en outre :

- des moyens (S4) pour déterminer une première tangente (AA') à la courbe de luminosité (LUX) tangente à un endroit de ladite courbe représentatif d'une région de luminosité sensiblement indépendante de l'élément perturbateur (BR),

- des moyens (S5) pour déterminer une deuxième tangente (CC') à la courbe de luminosité (LUX) tangente à un endroit de ladite courbe représentatif d'une stabilisation de la luminosité, et

- des moyens (S6) pour déterminer une ligne de balayage (FBL) fonction de la première tangente (AA') et de la deuxième tangente (CC'), ladite ligne de balayage étant représentative de la distance de visibilité (D).

11. Dispositif (PRO) selon la revendication précédente, **caractérisé en ce qu'**il est intégré dans une caméra (2) à bord du véhicule (1).

12. Dispositif (PRO) selon l'une des revendications précédentes 10 ou 11, **caractérisé en ce que** la ligne de balayage (FBL) est calculée en fonction d'un point d'intersection (F) entre la courbe de luminosité (LUX) et une parallèle (BB') à la première tangente (AA') à une distance (d1) déterminée de la première tangente (AA') et de la deuxième tangente (CC').

13. Dispositif (PRO) selon la revendication précédente, **caractérisé en ce que** la distance déterminée (d1) est la distance entre la première tangente (AA') et la deuxième tangente (CC') divisée par deux.

14. Dispositif (PRO) selon l'une des revendications précédentes 10 à 13, **caractérisé en ce qu'**il comporte en outre des moyens (S7) pour déterminer la distance de visibilité (D) à partir de la ligne de balayage trouvée (FBL) et au moyen d'une table de correspondance (TAB) ou au moyen d'un calcul trigonométrique.

15. Produit programme d'ordinateur comprenant une ou plusieurs séquences d'instructions pour mettre en oeuvre, lorsque ledit programme est exécuté par un processeur, le procédé selon l'une quelconque des revendications précédentes 1 à 9.

**Claims**

1. Method for determining a distance of visibility (D) for a driver of a vehicle in the presence of an element (BR) disrupting the visibility of the driver, comprising the following steps:

- videoing at least one image (I1, I2) of a field of space (4) located in front of the vehicle, said image being defined by an array of pixels (PIX) and sweep-lines (BL),

- separating said image (I1, I2) in two parts by a first line (7) passing through a pre-set point (PD),

- determining the luminosity of pixels (PIX) of said first line (7), resulting in a curve of luminosity (LUX),

**characterised in that** it comprises moreover the following steps:

- determining a first tangent (AA') to the curve of luminosity (LUX) tangential at a place of said curve representative of a region of luminosity substantially independent of the disruptive element (BR),

- determining a second tangent (CC') to the curve of luminosity (LUX) tangential at a place of said curve representative of stabilisation of the luminosity,

- determining a sweep-line (FBL) according to the first tangent (AA') and second tangent (CC'), said sweep-line (FBL) being representative of the distance of visibility (D).

2. Method according to claim 1, **characterised in that** said disruptive element is fog.

3. Method according to any one of claims 1 or 2, **characterised in that** the first line (7) is a vertical straight line.

**4.** Method according to any one of the preceding claims, **characterised in that** it comprises moreover:

> - a step of searching the zones of said image, each responding to a predicate of homogeneity,
> - determining the centre of gravity (G1, G2) for each of said zones,
> - determining the global centre of gravity (G) for each of said centres of gravity (G1, G2) of said zones, said global centre of gravity (G) being said pre-set point (PD).

**5.** Method according to any one of the preceding claims, **characterised in that** the second tangent (CC') is parallel to the first tangent (AA').

**6.** Method according to any one of the preceding claims, **characterised in that** the sweep-line (FBL) is calculated according to an intersection point (F) between the curve of luminosity (LUX) and a parallel line (BB') to the first tangent (AA') at a given distance (d1/2) from the first tangent (AA') and second tangent (CC').

**7.** Method according to the preceding claim, **characterised in that** the given distance (d1/2) is the distance between the first tangent (AA') and second tangent (CC') divided by two.

**8.** Method according to any one of the preceding claims, **characterised in that** the distance of visibility (D) is determined on the basis of the sweep-line (FBL) found and by means of a correspondence table (TAB) or by means of a trigonometric calculation.

**9.** Method according to the preceding claim, **characterised in that** trigonometric calculation is as follows: the distance of visibility is equal to a height (h) relative to the ground (6) of an element (2) taking the image, divided by the tangent of:

> - the value of a sight angle ($\alpha$0) of the highest sweep-line (BL256), plus
> - a total angular field (A) divided by the number (256) of the highest sweep-line (BL256), the lot multiplied by:
> - this number of the highest sweep-line (256) minus sweep-line (FBL) corresponding to the intersection point (F) calculated.

**10.** Device (PRO) for determining a distance of visibility (D) for a driver of a vehicle in the presence of an element (BR) disrupting the visibility of the driver, comprising:

> - means (S1) to receive at least one image (I1, 12) videoed on the basis of a field of space (4) located in front of the vehicle, said image being defined by an array of pixels (PIX) and sweep-lines (BL),
- means (S2) to separate said image (11, 12) in two parts by a first line (7) passing through a pre-set point (PD),
- means (S3) to determine the luminosity of the pixels of said first line (7), resulting in a curve of luminosity (LUX),

**characterised in that** it comprises moreover:

> - means (S4) to determine a first tangent (AA') to the curve of luminosity (LUX) tangential at a place of said curve representative of a region of luminosity substantially independent of the disruptive element (BR),
> - means (S5) to determine a second tangent (CC') to the curve of luminosity (LUX) tangential at a place of said curve representative of stabilisation of the luminosity, and
> - means (S6) to determine a sweep-line (FBL) according to the first tangent (AA') and second tangent (CC'), said sweep-line being representative of the distance of visibility (D).

**11.** Device (PRO) according to the preceding claim, **characterised in that** it is integrated in a camera (2) on board the vehicle (1).

**12.** Device (PRO) according to any one of the preceding claims 10 or 11, **characterised in that** the sweep-line (FBL) is calculated according to an intersection point (F) between the curve of luminosity (LUX) and a parallel line (BB') to the first tangent (AA') at a given distance (d1) from the first tangent (AA') and second tangent (CC').

**13.** Device (PRO) according to the preceding claim, **characterised in that** the given distance (d1) is the distance between the first tangent (AA') and second tangent (CC') divided by two.

**14.** Device (PRO) according to any one of the preceding claims 10 to 13, **characterised in that** it comprises moreover means (S7) to determine the distance of visibility (D) on the basis of the sweep-line found (FBL) and by means of a correspondence table (TAB) or by means of a trigonometric calculation.

**15.** Computer program product comprising one or more sequences of instructions to implement, if said program is executed by a processor, the method according to any one of the preceding claims 1 to 9.

**Patentansprüche**

1. Verfahren zum Bestimmen einer Sichtweite (D) für den Fahrer eines Fahrzeugs bei Auftreten eines die Sicht des Fahrers beeinträchtigenden Elements (BR), das die folgenden Schritte umfasst:

    - Erfassen wenigstens eines Bildes (I1, I2) eines sich vor dem Fahrzeug befindlichen Raumfeldes (4), wobei das Bild durch eine Reihe von Pixeln (PIX) und Bildzeilen (BL) definiert ist,
    - Teilen des Bildes (I1, I2) in zwei Teile mittels einer ersten durch einen vorbestimmten Punkt (PD) verlaufenden Linie (7),
    - Bestimmen der Helligkeit der Pixel (PIX) der ersten Linie (7), resultierend in eine Helligkeitskurve (LUX),

    **dadurch gekennzeichnet, dass** es ferner die folgenden Schritte umfasst:

    - Bestimmen einer ersten Tangente (AA') an der Helligkeitskurve (LUX), die einen Punkt der Kurve tangiert, der für einen Helligkeitsbereich repräsentativ ist, welcher von dem beeinträchtigenden Element (BR) im Wesentlichen unabhängig ist,
    - Bestimmen einer zweiten Tangente (CC') an der Helligkeitskurve (LUX), die einen Punkt der Kurve tangiert, der für eine Helligkeitsstabilisierung repräsentativ ist,
    - Bestimmen einer Bildzeile (FBL) in Abhängigkeit von der ersten Tangente (AA') und der zweiten Tangente (CC'), wobei die Bildzeile (FBL) für die Sichtweite (D) repräsentativ ist.

2. Verfahren nach Anspruch 1,
    **dadurch gekennzeichnet, dass** das beeinträchtigende Element Nebel ist.

3. Verfahren nach einem der Ansprüche 1 oder 2,
    **dadurch gekennzeichnet, dass** die erste Linie (7) eine senkrechte gerade Linie ist.

4. Verfahren nach einem der vorhergehenden Ansprüche,
    **dadurch gekennzeichnet, dass** es ferner umfasst:

    - einen Schritt zum Ermitteln von Bereichen des Bildes, die jeweils einer Homogenitätsvorbedingung entsprechen,
    - Bestimmen des Schwerpunkts (G1, G2) eines jeden Bereichs,
    - Bestimmen des allgemeinen Schwerpunkts (G) eines jeden Schwerpunkts (G1, G2) der Bereiche, wobei der allgemeine Schwerpunkt (G) der vorbestimmte Punkt (PD) ist.

5. Verfahren nach einem der vorhergehenden Ansprüche,
    **dadurch gekennzeichnet, dass** die zweite Tangente (CC') zu der ersten Tangente (AA') parallel ist.

6. Verfahren nach einem der vorhergehenden Ansprüche,
    **dadurch gekennzeichnet, dass** die Bildzeile (FBL) in Abhängigkeit von einem Schnittpunkt (F) zwischen der Helligkeitskurve (LUX) und einer Parallelen (BB') zu der ersten Tangente (AA') mit einem bestimmten Abstand (d1/2) von der ersten Tangente (AA') und der zweiten Tangente (CC') berechnet wird.

7. Verfahren nach dem vorhergehenden Anspruch,
    **dadurch gekennzeichnet, dass** der bestimmte Abstand (d1/2) der Abstand zwischen der ersten Tangente (AA') und der zweiten Tangente (CC') dividiert durch zwei ist.

8. Verfahren nach einem der vorhergehenden Ansprüche,
    **dadurch gekennzeichnet, dass** die Sichtweite (D) anhand der gefundenen Bildzeile (FBL) und mittels einer Zuordnungstabelle (TAB) oder mittels einer trigonometrischen Berechnung bestimmt wird.

9. Verfahren nach dem vorhergehenden Anspruch,
    **dadurch gekennzeichnet, dass** die trigonometrische Berechnung wie folgt lautet: die Sichtweite ist gleich einer Höhe (h) bezüglich des Bodens (6) eines das Bild erfassenden Elements (2) dividiert durch die Tangente:

    - des Wertes eines Sichtwinkels ($\alpha$0) der höchsten Bildzeile (BL256), zuzüglich
    - eines Gesamtbildwinkels (A) dividiert durch die Nummer (256) der höchsten Bildzeile (BL256), das Ganze multipliziert mit:
    - der Nummer (256) der höchsten Bildzeile abzüglich der dem berechneten Schnittpunkt (F) entsprechenden Bildzeile (FBL).

10. Vorrichtung zum Bestimmen (PRO) einer Sichtweite (D) für einen Fahrer eines Fahrzeugs bei Auftreten eines die Sicht des Fahrers beeinträchtigenden Elements (BR), umfassend:

    - Mittel (S1) zum Erhalt wenigstens eines anhand eines sich vor dem Fahrzeug befindlichen Raumfeldes (4) erfassten Bildes (I1, I2), wobei das Bild durch eine Reihe von Pixeln (PIX) und Bildzeilen (BL) definiert ist,
    - Mittel (S2) zum Teilen des Bildes (I1, I2) in zwei Teile mittels einer ersten durch einen vorbestimmten Punkt (PD) verlaufenden Linie (7),
    - Mittel (S3) zum Bestimmen der Helligkeit der Pixel der ersten Linie (7), resultierend in einer Helligkeitskurve (LUX),

**dadurch gekennzeichnet, dass** sie ferner umfasst:

- Mittel (S4) zum Bestimmen einer ersten Tangente (AA') an der Helligkeitskurve (LUX), die einen Punkt der Kurve tangiert, der für einen Helligkeitsbereich repräsentativ ist, welcher von dem beeinträchtigenden Element (BR) im Wesentlichen unabhängig ist,
- Mittel (S5) zum Bestimmen einer zweiten Tangente (CC') an der Helligkeitskurve (LUX), die einen Punkt der Kurve tangiert, der für eine Helligkeitsstabilisierung repräsentativ ist, und
- Mittel (S6) zum Bestimmen einer Bildzeile (FBL) in Abhängigkeit von der ersten Tangente (AA') und der zweiten Tangente (CC'), wobei die Bildzeile für die Sichtweite (D) repräsentativ ist.

11. Vorrichtung (PRO) nach dem vorhergehenden Anspruch,
    **dadurch gekennzeichnet, dass** sie in eine Kamera (2) an Bord des Fahrzeugs (1) integriert ist.

12. Vorrichtung (PRO) nach einem der vorhergehenden Ansprüche 10 oder 11,
    **dadurch gekennzeichnet, dass** die Bildzeile (FBL) in Abhängigkeit von einem Schnittpunkt (F) zwischen der Helligkeitskurve (LUX) und einer Parallelen (BB') zu der ersten Tangente (AA') mit einem bestimmten Abstand (d1) von der ersten Tangente (AA') und der zweiten Tangente (CC') berechnet wird.

13. Vorrichtung (PRO) nach dem vorhergehenden Anspruch,
    **dadurch gekennzeichnet, dass** die bestimmte Entfernung (d1) der Abstand zwischen der ersten Tangente (AA') und der zweiten Tangente (CC') dividiert durch zwei ist.

14. Vorrichtung (PRO) nach einem der vorhergehenden Ansprüche 10 bis 13,
    **dadurch gekennzeichnet, dass** sie ferner Mittel (S7) zum Bestimmen der Sichtweite (D) anhand der gefundenen Bildzeile (FBL) und mittels einer Zuordnungstabelle (TAB) oder mittels einer trigonometrischen Berechnung umfasst.

15. Computerprogrammprodukt mit einer oder mehreren Befehlsfolgen zur Durchführung des Verfahrens nach einem der vorhergehenden Ansprüche 1 bis 9, wenn das Programm durch einen Prozessor ausgeführt wird.

EP 1 868 161 B1

**FIG. 1**

FIG. 2

**FIG. 3**

FIG. 5

FIG. 4

**FIG.6**

EP 1 868 161 B1

**FIG. 7**

FIG. 9

FIG. 8

**FIG. 10**

**EP 1 868 161 B1**

## RÉFÉRENCES CITÉES DANS LA DESCRIPTION

**Documents brevets cités dans la description**

- EP 1422663 A1